# FASCICULE DE BREVET EUROPEEN

(11) **EP 3 770 789 B1**
(45) Date de publication et mention de la délivrance du brevet: **05.01.2022**
(21) Numéro de dépôt: 20185301.7
(22) Date de dépôt: 10.07.2020
(51) Int. Cl.: G06F 21/75, G06F 21/87, G06K 19/073, H01L 23/00

(54) **PROCÉDÉ DE PROTECTION DE DONNÉES STOCKÉES DANS UNE MÉMOIRE, ET CIRCUIT INTÉGRÉ CORRESPONDANT**
VERFAHREN ZUM SCHUTZ VON IN EINEM SPEICHER GESPEICHERTEN DATEN, UND ENTSPRECHENDER INTEGRIERTER SCHALTKREIS
METHOD FOR PROTECTING DATA STORED IN A MEMORY, AND CORRESPONDING INTEGRATED CIRCUIT

(30) Priorité: 24.07.2019 FR 1908376
(43) Date de publication de la demande: 27.01.2021
(73) Titulaire: STMicroelectronics (Rousset) SAS, 13790 Rousset (FR)
(72) Inventeur: FORNARA, Pascal, 83910 POURRIÈRES (FR); MARINET, Fabrice, 13790 CHATEAUNEUF LE ROUGE (FR)
(74) Mandataire: Casalonga

(56) Documents cités:
- EP-A1- 2 680 184
- FR-A1- 2 938 953

## Description

Des modes de mise en œuvre et de réalisation concernent la protection de données stockées dans une mémoire de circuit intégré, en particulier contre l'ingénierie inversée.

Des techniques d'ingénierie inversée peuvent permettre de reconstruire toute la structure physique d'un circuit intégré, et aussi de récupérer des données contenues dans des mémoires non volatiles des circuits intégrés, en particulier des données secrètes.

Les données doivent être tenues secrètes par exemple si elles constituent un élément clé d'analyse du fonctionnement du circuit intégré ou si elles contiennent une clé de chiffrement/déchiffrement, des informations d'identification ou d'authentification, ou pour toute autre raison.

La récupération des données des mémoire non-volatiles comprend typiquement des sondages nanométriques, des techniques de contraste en tension passive (usuellement désigné par le terme anglais « passive voltage contrast » ou son acronyme «PVC») ou des techniques de courant induit par faisceau d'électron (usuellement désigné par le terme anglais « electron beam induced current » ou son acronyme « EBIC »).

Ces techniques nécessitent d'accéder aux parties rétro-analysées du circuit intégré par la face avant pour typiquement y poser des sondes en contact, ou par la face arrière pour accéder à des grilles flottantes des cellules-mémoires.

La face avant est classiquement la face du substrat semiconducteur du circuit intégré sur laquelle sont réalisés les transistors, et au-dessus de laquelle se trouve typiquement une partie d'interconnexion (usuellement désignée par l'acronyme BEOL du terme anglais « Back End Of Line »).

La face arrière est la face opposée à la face avant du substrat.

Pour accéder aux parties rétro-analysées du circuit intégré le circuit intégré est typiquement usiné soit mécaniquement, soit par l'utilisation d'un faisceau d'ion focalisé (usuellement « FIB » pour « Focalised Ion Beam » en anglais) soit par ablation plasma.

L'usinage mécanique, ou mécano-chimique, de la face avant permet notamment de déstratifier, niveau par niveau, la partie d'interconnexion, afin de reconstituer les interconnexions. L'usinage mécanique comprend typiquement un polissage mécanique lubrifié à l'eau, ou éventuellement avec des compositions chimiques en solution aqueuse. En face arrière cette technique permet d'amincir le circuit.

L'usinage par faisceau d'ions focalisé FIB permet de mettre en œuvre des gravures nanométriques par exemple pour atteindre par la face arrière le voisinage d'une grille flottante afin d'observer son comportement électrique, par exemple par PVC ou EBIC, et en déduire l'information stockée. La technique de FIB par la face avant permet aussi d'accéder aux niveaux d'interconnexion

Le document EP 2 680 184 A1 divulgue un circuit intégré comprenant des structures conductrices de protection contre les attaques chimiques ou mécaniques visant à déterminer le fonctionnement du circuit ou à lire des données stockées. Lorsque le niveau de charge détecté pour une structure conductrice de protection ne correspond plus à une charge électrique dans la plage de charge donnée, un circuit de détection émet un signal de protection, qui est par la suite utilisé par le circuit intégré pour rendre non-fonctionnelle une partie du circuit à protéger.

Dans le document FR 2 938 953 A1, un circuit de détection est réalisé sous la forme d'un circuit électriquement ouvert au voisinage des zones sensibles, de façon qu'une attaque chimique par un liquide conducteur provoque la fermeture du circuit au voisinage des zones sensibles et par conséquent la détection de l'attaque chimique. Un circuit de détection génère alors une alerte exploitable pour, par exemple, détruire une partie des données stockées dans la mémoire de la puce.

Des dispositifs de détection d'ingénierie inversée classiques ne sont pas efficaces pour détecter les procédés décrits ci-dessus si le circuit intégré n'est pas alimenté, ou si la fonctionnalité du circuit intégré est détruite.

Ainsi il est souhaitable d'améliorer les techniques de protection des données stockées dans les mémoires circuit intégrés, et contre tous les types d'approche.

Selon un aspect il est proposé un procédé de protection de données stockées dans une mémoire d'un circuit intégré, comprenant :
- une fabrication de la mémoire comportant une fabrication d'au moins un transistor d'état comprenant une grille flottante, et une écriture d'une donnée respective dans chaque transistor d'état comprenant un stockage d'une charge représentative de la donnée dans la grille flottante du transistor d'état ;
- une fabrication d'un dispositif de protection comprenant une réalisation, pour au moins un transistor d'état, d'au moins une structure capacitive comprenant un premier corps électriquement conducteur couplé à la grille flottante du transistor d'état, un corps diélectrique, et un deuxième corps électriquement conducteur couplé à une borne de masse, dans lequel le corps diélectrique est configuré pour coupler électriquement la grille flottante et la borne de masse de façon à modifier la charge de la grille flottante et perdre la donnée correspondante si une solution aqueuse est mise en contact avec le corps diélectrique, et pour isoler électriquement la grille flottante et la borne de masse sinon.

En d'autres termes, le transistor d'état stockant la donnée, est connectée à des structures capacitives assimilables à des antennes dont l'objectif est de modifier la charge stockée et de perdre les informations en cas d'ingénierie inversée.

En effet, en cas de contact avec une solution aqueuse, les deux corps électriquement conducteurs de la structure capacitive vont être électriquement couplés. La grille flottante ainsi couplée avec la borne de masse du circuit intégré va naturellement perdre sa charge, et donc l'information que cette charge représentait sera perdue.

En outre, en cas d'application d'un faisceau de particules électriquement chargées, par exemple du type faisceau d'ions focalisé FIB, le premier corps électriquement conducteur va collecter les charges du faisceau et ainsi modifier la charge de la grille flottante, et donc l'information que cette charge représentait sera perdue.

Ainsi, la perte des données stockées se produit intrinsèquement, sans avoir besoin d'activer fonctionnellement ou d'alimenter le circuit intégré.

Bien entendu, les structures dites capacitives n'ont pas pour destination d'apporter un effet capacitif, et peuvent avantageusement être configurées à cet égard, mais sont désignées ainsi en raison de leur structure possédant deux corps conducteurs, isolés par un corps diélectrique.

Selon un mode de mise en œuvre, la réalisation de chaque structure capacitive du dispositif de protection comprend une formation du premier corps électriquement conducteur et du deuxième corps électriquement conducteur dans un même niveau de métal d'une partie d'interconnexion du circuit intégré, le deuxième corps électriquement conducteur étant configuré pour avoir une forme épousant au moins une partie du contour de la forme du premier corps électriquement conducteur.

Ainsi, mettre en œuvre un polissage mécanique des niveaux d'interconnexion classique engendrera un couplage entre les corps électriquement conducteurs des structures capacitives et la perte des informations contenues dans la mémoire.

Selon un mode de mise en œuvre, le procédé comprend une réalisation de plusieurs transistors d'état et de plusieurs structures capacitives respectivement pour lesdits plusieurs transistors d'état, les structures capacitives respectives étant fabriquées dans des niveaux de métal différents d'une structure capacitive à une autre.

Cela permet de compliquer des tentatives d'évitement du dispositif de protection des données stockées dans la mémoire, étant donné qu'il faudrait reproduire lesdites tentatives distinctement dans chaque niveau de métal comportant les structures capacitives respectives.

Selon un mode de mise en œuvre, la formation du matériau diélectrique est incluse à une formation d'une couche de diélectrique inter-métal du niveau de métal dans lequel sont formés les corps électriquement conducteurs respectifs.

Un tel matériau diélectrique peut être configuré pour coupler électriquement le premier et le deuxième corps conducteur si une solution aqueuse est mise en contact avec le corps diélectrique, et pour les isoler électriquement sinon, par exemple si sa structure est suffisamment étroite entre le premier corps électriquement conducteur et le deuxième corps électriquement conducteur.

Selon un mode de mise en œuvre, dans la réalisation de chaque structure capacitive, la réalisation du premier corps électriquement conducteur comprend une formation d'une première piste métallique s'étendant dans une direction du plan du niveau de métal respectif, et la réalisation du deuxième corps électriquement conducteur comprend une formation d'une deuxième piste métallique longeant la première piste métallique.

Ce mode de mise en œuvre présente l'avantage d'être simple et efficace, et de faciliter l'intégration du dispositif de protection des données dans des circuits intégrés existants.

Selon un mode de mise en œuvre, le procédé comprend en outre une fabrication d'au moins une première structure capacitive de compensation comprenant un troisième corps électriquement conducteur couplé à une grille de commande du transistor d'état, la grille de commande surmontant la grille flottante, le troisième corps électriquement conducteur étant configuré pour être en couplage capacitif avec le premier corps conducteur de ladite au moins une structure capacitive du dispositif.

Selon un mode de mise en œuvre, la fabrication du dispositif de protection des données comprend en outre une réalisation d'au moins une tranchée remplie d'un matériau conducteur s'étendant verticalement en profondeur dans un substrat semiconducteur du circuit intégré, le matériau conducteur remplissant chaque tranchée étant couplé électriquement à la grille flottante d'un transistor d'état respectif.

Ce mode de mise en œuvre permet avantageusement de perdre les données stockées en cas d'approche par la face arrière du substrat d'un faisceau de particules électriquement chargées. En effet, le matériau conducteur remplissant la tranchée va collecter les charges du faisceau en profondeur dans le substrat et ainsi modifier la charge de la grille flottante, et donc l'information que cette charge représentait sera perdue.

Selon un mode de mise en œuvre, le procédé comprend en outre une fabrication d'au moins une deuxième structure capacitive de compensation comprenant une deuxième tranchée remplie d'un matériau conducteur électriquement couplé à une grille de commande du transistor d'état, la grille de commande surmontant la grille flottante, le matériau conducteur remplissant ladite au moins une deuxième tranchée étant configuré pour être en couplage capacitif avec le matériau conducteur remplissant ladite au moins une tranchée du dispositif de protection des données.

Selon des modes de mise en œuvre, la réalisation de ladite au moins une tranchée remplie d'un matériau conducteur, et/ou la réalisation de ladite au moins une deuxième tranchée sont exécutées simultanément avec la réalisation d'une région de grille verticale d'un transistor enterré couplé à chaque transistor d'état.

Par ailleurs, la donnée écrite dans chaque transistor d'état est avantageusement destinée à être lue pour mettre en œuvre une fonction du circuit intégré, telle qu'un code d'instructions de démarrage du circuit intégré, ou telle qu'une clé de chiffrement/déchiffrement.

Ainsi, selon un mode de mise en œuvre, en cas de mise en œuvre d'une ingénierie inversée comprenant au moins un polissage mécanique, ou un usinage de faisceau d'ions focalisé par la face avant ou par la face arrière, les données faisant l'objet même de cette ingénierie inversée sont intrinsèquement perdues.

Selon un autre aspect, il est proposé un circuit intégré comprenant :
- une mémoire comportant au moins un transistor d'état comprenant une grille flottante, chaque transistor d'état stockant une charge représentative d'une donnée respective dans sa grille flottante ;
- un dispositif de protection des données stockées dans la mémoire comprenant, pour au moins un transistor d'état, au moins une structure capacitive comprenant un premier corps électriquement conducteur couplé à la grille flottante du transistor d'état, un corps diélectrique, et un deuxième corps électriquement conducteur couplé à une borne de masse, dans lequel le corps diélectrique est configuré pour coupler électriquement la grille flottante et la borne de masse de façon à modifier la charge de la grille flottante et perdre la donnée correspondante si une solution aqueuse est mise en contact avec le corps diélectrique, et pour isoler électriquement la grille flottante et la borne de masse sinon.

Selon un mode de réalisation, le premier corps électriquement conducteur et le deuxième corps électriquement conducteur de chaque structure capacitive du dispositif de protection sont situées dans un même niveau de métal d'une partie d'interconnexion du circuit intégré, le deuxième corps électriquement conducteur ayant une forme épousant au moins une partie du contour de la forme du premier corps électriquement conducteur.

Selon un mode de réalisation, dans chaque structure capacitive, le premier corps électriquement conducteur comprend une première piste métallique s'étendant dans une direction du plan du niveau de métal respectif, et le deuxième corps électriquement conducteur comprend une formation d'une deuxième piste métallique longeant la première piste métallique.

Selon un mode de réalisation, le circuit intégré comprend plusieurs transistors d'état et plusieurs structures capacitives respectives, les structures capacitives étant situées dans des niveaux de métal différents d'une structure capacitive à une autre.

Selon un mode de réalisation, le matériau diélectrique est inclus à une couche de diélectrique inter-métal du niveau de métal dans lequel sont situés les corps électriquement conducteurs respectifs.

Selon un mode de réalisation, le circuit intégré comporte en outre au moins une première structure capacitive de compensation, comprenant un troisième corps électriquement conducteur couplé à une grille de commande dudit au moins un transistor d'état, la grille de commande surmontant la grille flottante, le troisième corps électriquement conducteur étant configuré pour être en couplage capacitif avec le premier corps conducteur de ladite au moins une structure capacitive.

Selon un mode de réalisation, le dispositif de protection des données comprend en outre au moins une tranchée remplie d'un matériau conducteur s'étendant verticalement en profondeur dans un substrat semiconducteur du circuit intégré, le matériau conducteur remplissant chaque tranchée étant couplé électriquement à la grille flottante d'un transistor d'état respectif.

Selon un mode de réalisation, le circuit intégré comprend en outre au moins une deuxième structure capacitive de compensation comprenant une deuxième tranchée remplie d'un matériau conducteur, le matériau conducteur remplissant la deuxième tranchée étant configuré pour être en couplage capacitif avec le matériau conducteur remplissant ladite au moins une tranchée du dispositif de protection des données.

Selon un mode de réalisation, ladite au moins une tranchée remplie d'un matériau conducteur et/ou ladite au moins une deuxième tranchée remplie d'un matériau conducteur ont la même structure et comprennent les même matériaux qu'une grille verticale d'un transistor enterré couplé à chaque transistor d'état.

Selon un mode de réalisation, ladite donnée stockée dans chaque transistor d'état est destinée à être lue pour mettre en œuvre une fonction du circuit intégré, telle qu'un code d'instructions de démarrage du circuit intégré, ou telle qu'une clé de chiffrement/déchiffrement.

D'autres avantages et caractéristiques de l'invention apparaîtront à l'examen de la description détaillée de modes de réalisation et de mise en œuvre, nullement limitatifs, et des dessins annexés sur lesquels :
[Fig 1A]
[Fig 1B]
[Fig 2]
[Fig 3]
[Fig 4]

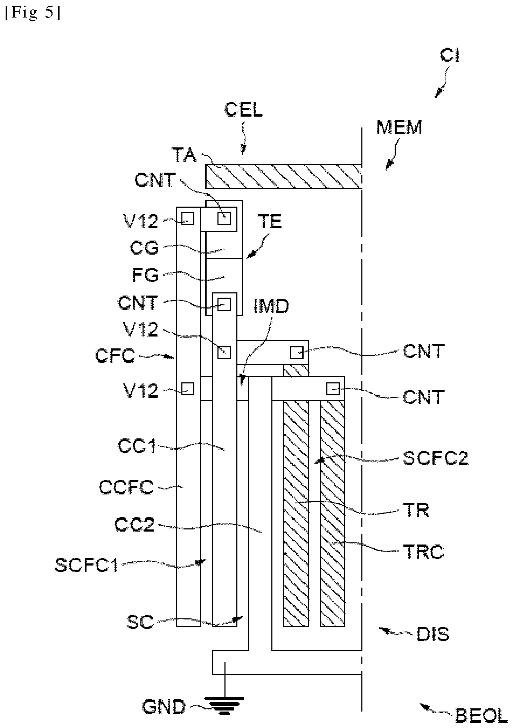

[Fig 5] illustrent des modes de réalisation et de mise en œuvre de l'invention.

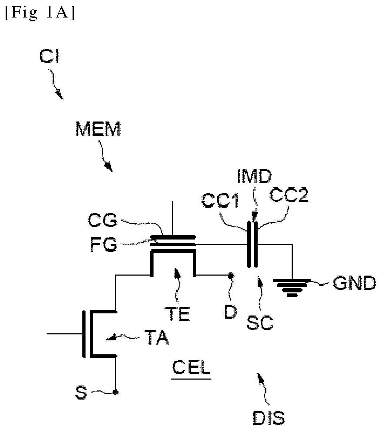

La figure 1A représente un schéma électrique d'une cellule mémoire CEL d'une mémoire MEM d'un circuit intégré CI.

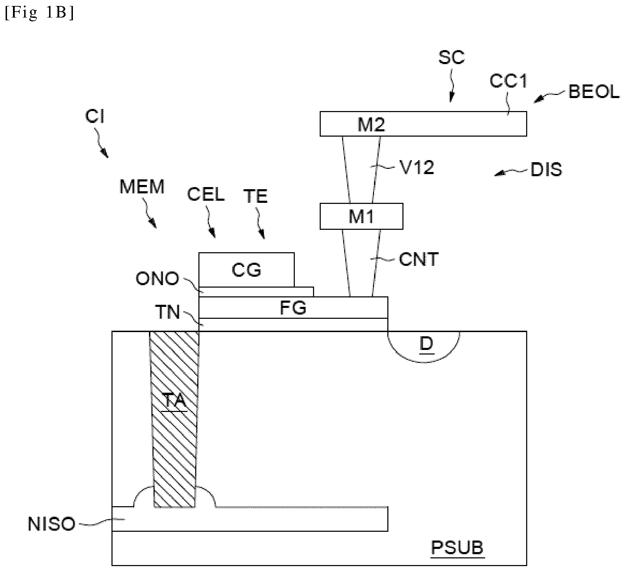

La figure 1B représente une vue en coupe de la même cellule mémoire CEL fabriquée dans et sur un substrat semiconducteur PSUB du circuit intégré CI.

La cellule mémoire CEL comporte un transistor d'accès TA, permettant de sélectionner la cellule mémoire CEL parmi d'autres dans la mémoire non volatile MEM, selon un exemple de configuration de transistor enterrée à grille verticale.

La grille du transistor d'accès TA est formée par un matériau conducteur, par exemple du silicium polycristallin, remplissant une tranchée ouverte dans le substrat PSUB dont les parois ont été recouvertes d'un oxyde de grille. Une région semiconductrice enterrée NISO au niveau au fond de la tranchée forme une région de source S du transistor d'accès TA.

La cellule mémoire CEL comporte un transistor d'état TE permettant de stocker une donnée. Le transistor d'état TE comporte une grille flottante FG et une grille de commande CG.

Les données stockées dans les transistors d'états TE sont écrites afin d'être lues pour mettre en œuvre une fonction du circuit intégré CI. Les transistors d'état TE peuvent stocker tout type de donnée, en particulier des données devant être tenues secrètes. Par exemple lesdites données codent des instructions de démarrage du circuit intégré, ou contiennent une clé de chiffrement/déchiffrement.

Pour écrire une donnée dans le transistor d'état TE, des charges sont injectées par effet Fowler-Nordheim à travers un diélectrique tunnel TN, entre la grille flottante FG et une région de drain D.

La grille de commande CG est électriquement isolée de la grille flottante FG par une région diélectrique du type oxyde-nitrure-oxyde de silicium ONO. La grille de commande CG permet de générer les champs électriques pour l'effet Fowler-Nordheim, et pour lire les données stockées. La lecture est basée sur une mesure de la tension de seuil sur la grille de commande CG du transistor d'état TE, qui est paramétrée par la charge de la grille flottante FG.

Ainsi la charge de la grille flottante FG dans chaque transistor d'état TE est représentative d'une donnée respective.

Le circuit intégré CI comporte un dispositif DIS de protection des données stockées dans la mémoire MEM, permettant de perdre les informations contenues dans les données de la mémoire MEM en cas d'une mise en œuvre d'une ingénierie inversée sur le circuit intégré CI.

Le dispositif DIS comprend une structure capacitive SC comprenant un premier corps électriquement conducteur CC1 couplé à la grille flottante FG du transistor d'état TE, un corps diélectrique IMD, et un deuxième corps électriquement conducteur CC2 (figure 1A, le deuxième corps électriquement conducteur CC2 n'étant pas visible dans le plan de coupe de la figure 1B) couplé à une borne de masse GND.

Cela étant, la structure capacitive SC n'est pas destinée à produire un effet capacitif sur le transistor d'état TE, et sa valeur capacitive peut être configurée de façon à produire un effet négligeable vis-à-vis du facteur de couplage de la cellule.

Le facteur de couplage de la cellule est le rapport de la capacité entre la grille de commande CG et la grille flottante FG sur la capacité entre la grille flottante FG et le substrat PSUB. Ce facteur est clé pour la programmation et l'effacement de la cellule.

Le corps diélectrique IMD est configuré avec une faible constante diélectrique, généralement de structure poreuse, et par exemple en oxide de silicium. Cela a pour effet que la permittivité relative du corps diélectrique IMD augmente s'il est mis au contact d'eau, par exemple au contact d'une solution aqueuse lubrifiant un polissage mécanique.

Lorsque la permittivité du corps diélectrique IMD augmente, la quantité de fuites de courants augmente, ce qui produit un couplage électrique entre le premier corps électriquement conducteur CC1 et le deuxième corps électriquement conducteur CC2 de la structure capacitive SC. Ainsi, le nœud flottant (charge stockée) dans la grille flottante FG du transistor d'état TE se décharge vers la masse GND, quel que soit son signe.

Le corps diélectrique est par ailleurs configuré pour isoler électriquement le premier corps électriquement conducteur CC1, et le deuxième corps électriquement conducteur CC2 dans son état normal, c'est-à-dire n'ayant pas été mis au contact d'une solution aqueuse.

Ainsi, le corps diélectrique est configuré pour coupler électriquement la grille flottante FG et la borne de masse GND, de façon à modifier la charge de la grille flottante FG et perdre la donnée correspondante, si une solution aqueuse est mise en contact avec le corps diélectrique IMD ; le corps diélectrique IMD est parallèlement configuré pour isoler électriquement la grille flottante FG et la borne de masse GND sinon.

Comme il est visible sur la figure 1B, la structure capacitive SC est formée dans un niveau de métal M2 de la partie d'interconnexion BEOL du circuit intégré (usuellement désignée par le terme anglais « Back End Of Line »).

La grille flottante FG du transistor d'état TE est couplée au premier corps électriquement conducteur CC1 par l'intermédiaire de contact CNT, reliant les éléments de la face avant du substrat PSUB avec le premier niveau de métal Ml, et par l'intermédiaire de vias V12 reliant deux niveaux de métal successifs.

Ainsi, en cas de mise en œuvre d'une ingénierie inversée comprenant un polissage mécanique ou mécano-chimique, de la partie d'interconnexion BEOL du circuit intégré CI, le liquide lubrifiant du polissage va engendrer un couplage entre la grille flottante et la borne de masse GND et la donnée stockée sera perdue.

Cette perte de donnée est obtenue intrinsèquement sans nécessiter une alimentation du circuit intégré CI.

Bien que représenté à des fins de simplifications dans le deuxième niveau de métal M2, la structure capacitive SC du dispositif DIS peut avantageusement être formée dans des niveaux de métal plus élevés, sans limitation, par exemple le cinquième, le sixième ou le septième niveau de métal.

En effet, il est avantageux que les données soient perdues le plus tôt possible dans le processus d'usinage mécanique de la partie d'interconnexion BEOL.

Aussi, le dispositif DIS de protection des données stockées dans la mémoire MEM peut comporter, pour un même transistor d'état TE, plusieurs structures capacitives SC dans plusieurs niveaux de métal pour améliorer la perte des données.

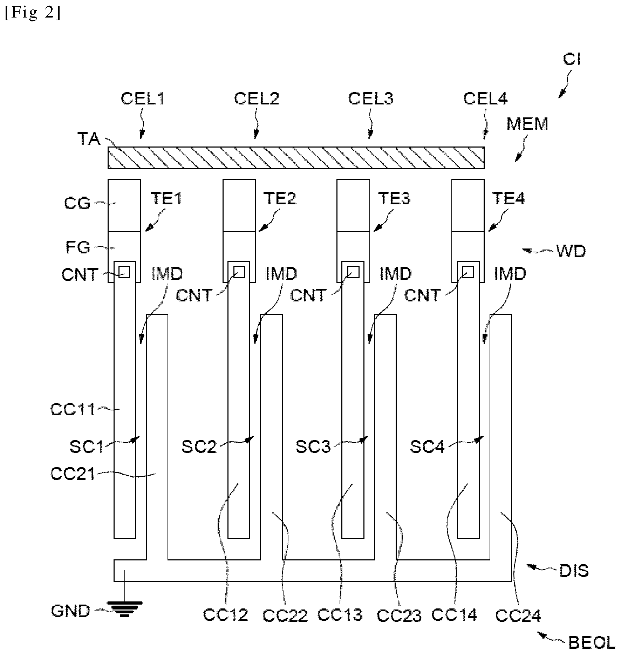

La figure 2 représente une vue du dessus de la mémoire MEM du circuit intégré CI.

La mémoire MEM comprend classiquement plusieurs cellules mémoires CEL1, CEL2, CEL3, CEL4 telles que décrites en relation avec les figures 1A et 1B, par exemple regroupées par mot mémoire WD.

Ainsi les cellules mémoires CEL1-CEL4 comportent chacune un transistor d'état TE1-TE4, et partagent au sein d'un mot mémoire WD la structure du transistor d'accès TA.

Le dispositif de protection DIS comporte (au moins) une structure capacitive SC1-SC4 par transistor d'état TE1-TE4, chacune dans un niveau de métal respectif. Ainsi, les structures capacitives SC1-SC4 peuvent être situées dans différents niveaux de métal, les niveaux de métal variant d'une structure capacitive à une autre.

De ce fait il est plus difficile de détecter et d'éventuellement éviter le dispositif DIS de protection des données stockées dans la mémoire MEM.

Dans chaque structure capacitive SC1-SC4, le premier corps électriquement conducteur CC11-CC14 et le deuxième corps électriquement conducteur CC21-CC24 sont situées dans le même niveau de métal de la partie d'interconnexion BEOL du circuit intégré CI.

Le deuxième corps électriquement conducteur CC21-CC24 a une forme épousant au moins une partie du contour de la forme du premier corps électriquement conducteur CC11-CC14.

Dans l'exemple représenté, chaque premier corps électriquement conducteur CC11-CC14 est formé par une première piste métallique s'étendant dans une direction du plan du niveau de métal. Les deuxièmes corps électriquement conducteurs CC21-CC24 sont formés par des deuxièmes pistes métalliques longeant respectivement chaque première piste métallique.

Les deuxièmes corps électriquement conducteurs sont par ailleurs tous reliés par exemple par une piste métallique perpendiculaire aux autres, pour les coupler à la borne de masse GND.

En d'autres termes, les structures capacitives peuvent comprendre une structure en forme de peignes enchevêtrés entre les premiers corps électriquement conducteurs CC11-CC14 et les deuxièmes corps électriquement conducteurs CC21-CC24. Les interstices entre les corps électriquement conducteurs sont comblés par le corps diélectrique IMD. Les structures appartiennent au plan du niveau de métal respectif.

Le matériau diélectrique IMD configuré pour que sa permittivité augmente en cas de contact avec une solution aqueuse, peut par exemple être directement formé par une couche de diélectrique inter-métal prévue entre les niveaux de métal de la partie d'interconnexion BEOL, si la couche diélectrique inter-métal prévue présente les caractéristiques du corps diélectriques des structures capacitives SC, telles que décrites ci-avant.

En outre, les premiers corps électriquement conducteurs CC1 peuvent capter des particules chargées qui les percutent, en particulier dans le cas d'une ingénierie inversée mettant en œuvre un usinage de la partie d'interconnexion BEOL avec un faisceau de particules chargées tel qu'un faisceau d'ions focalisé FIB (acronyme du terme usuel anglais « Focalised Ion Beam »).

En outre, en cas d'application d'un faisceau de particules électriquement chargées, par exemple du type FIB, le premier corps électriquement conducteur va collecter les charges du faisceau et ainsi modifier la charge de la grille flottante, et donc l'information que cette charge représentait sera perdue.

La demande de brevet français n°1857057 du même demandeur décrit l'utilisation de plaques métalliques dans un détecteur d'attaque utilisant un faisceau de particules chargées, qui effectue une mesure pour détecter si une attaque a eu lieu. Cette divulgation présente l'avantage de pouvoir détecter partout dans le circuit intégré une attaque ayant eu lieu alors que le circuit n'était pas encore alimenté au moment de l'attaque.

Or, dans le présent dispositif DIS de protection des données stockée dans la mémoire MEM, lorsque le premier corps électriquement conducteur collecte les charges du faisceau d'ions, la charge de la grille flottante de la mémoire est modifiée, et donc la donnée que cette charge représentait sera perdue, même si le circuit intégré n'est jamais alimenté.

En effet, les données stockées par chaque transistor d'état TE du mot-mémoire WD de la mémoire MEM sont destinées à un usage différent d'une détection d'attaque et comprennent en particulier des données secrètes. On rappelle que lesdites données sont destinées à être lues pour mettre en œuvre une fonction du circuit intégré CI, par exemple des données codant des instructions de démarrage du circuit intégré, ou des données d'une clé de chiffrement/déchiffrement.

En résumé, les structures capacitives SC telles que présenté ci-avant offrent un double emploi, sans compromis, permettant de détecter deux types de procédés d'ingénierie inversée avec une seule et unique structure.

Les structures capacitives SC sont avantageusement réalisées à proximité du transistor d'état respectif TE, afin d'optimiser les chances de capter les particules chargées d'un usinage par FIB visant à atteindre le transistor d'état TE, et un polissage mécanique visant à atteindre et analyser la mémoire MEM.

Par « à proximité du transistor d'état TE » on entend bien entendu que les structures capacitives sont localisées dans une région située dans un plan parallèle à la face avant sur laquelle le transistor d'état TE est formé, et à une distance de la position du transistor d'état TE, projetée dans ce plan, n'excédant avantageusement pas la taille usuelle d'une gravure par faisceau d'ions focalisé.

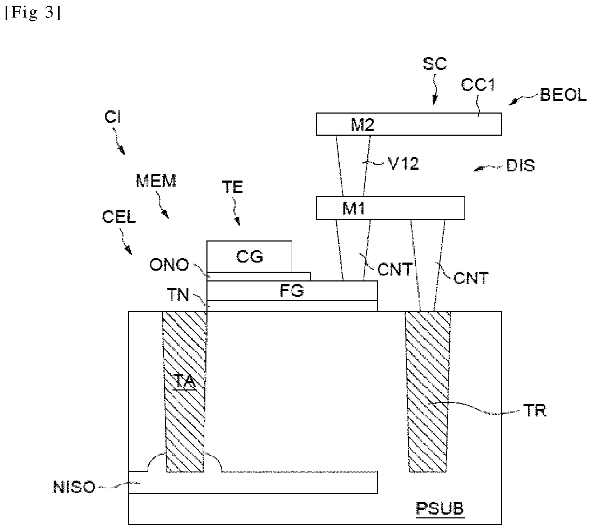

La figure 3 représente un mode de réalisation du dispositif DIS de protection des données stockées dans la mémoire MEM du circuit intégré CI, capable de détecter un usinage par faisceau d'ions focalisé du type FIB.

La cellule mémoire CEL est identique à la cellule mémoire décrite ci avant en relation avec les figures 1A, 1B et 2. Les éléments de la cellule mémoire CEL supportent les mêmes références et ne sont pas à nouveau détaillés ici.

Le dispositif DIS comprend en outre quant à lui au moins une tranchée remplie d'un matériau conducteur TR.

La tranchée TR s'étend verticalement en profondeur dans le substrat semiconducteur PSUB du circuit intégré CI. Le matériau conducteur peut être du silicium polycristallin. La tranchée remplie d'un matériau conducteur est par exemple de la même conception que le transistor d'accès TA décrit ci-avant en relation avec les figures 1A et 1B.

Par exemple, dans le procédé de fabrication du circuit intégré CI, la réalisation de la tranchée remplie d'un matériau conducteur TR est mise en œuvre simultanément avec la réalisation du transistor d'accès TA. Cela étant, la région semiconductrice enterrée NISO formant la région de source du transistor d'accès TA n'est pas utile, mais n'est pas nuisible non plus, à la fonction de la tranchée remplie d'un matériau conducteur TR du dispositif de protection des données DIS.

Le matériau conducteur remplissant la tranchée TR est couplé électriquement à la grille flottante FG du transistor d'état TE.

Par exemple le couplage entre le matériau conducteur remplissant la tranchée TR et la grille flottante FG peut comprendre un contact CNT reliant la tranchée TR avec une piste du premier niveau de métal Ml, la piste étant reliée à la grille flottante FG par un autre contact CNT.

Ainsi, le matériau conducteur remplissant la tranchée va collecter les charges d'un faisceau du type FIB, lorsqu'un usinage du type FIB (mis en œuvre depuis la face arrière du substrat PSUB) atteint le fond de la tranchée TR. Ainsi la charge de la grille flottante sera modifiée, et donc l'information que cette charge représentait sera perdue.

La tranchée remplie d'un matériau conducteur est avantageusement réalisée à proximité du transistor d'état respectif TE, afin d'optimiser les chances de capter les particules chargées d'un usinage par FIB visant à atteindre le transistor d'état TE par la face arrière du substrat PSUB.

La tranchée remplie d'un matériau conducteur TR peut être dessinée de façon à parcourir une surface maximisée du substrat (vu du dessus, la profondeur dans le substrat étant fixée par le procédé de fabrication), en fonction des possibilités permises par les autres éléments du circuit intégré formés dans et sur le même substrat.

Par ailleurs, il est également envisageable que la tranchée remplie d'un matériau conducteur TR soit par exemple située à distance du transistor d'état TE et qu'elle soit couplée à sa grille flottante FG par un trajet dans les niveaux d'interconnexions BEOL, si une telle position est avantageuse dans l'architecture du circuit intégré CI.

La figure 5 représente un mode de réalisation dans lequel un dispositif de conservation du facteur de couplage CFC permet de compenser un effet de réduction du facteur de couplage de la cellule mémoire CEL.

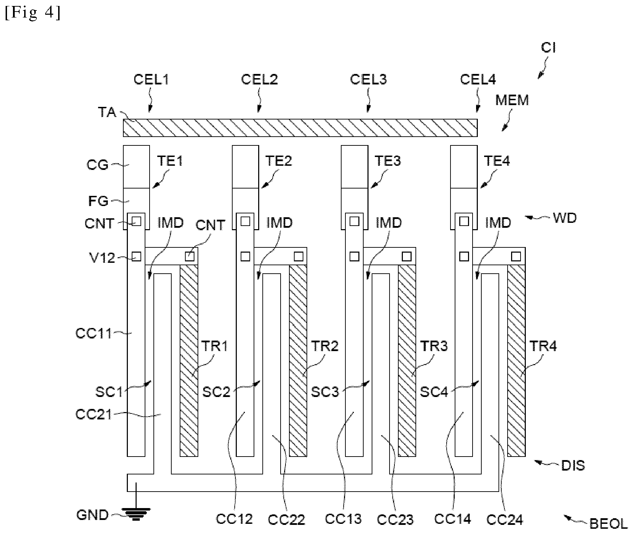

Dans cet exemple, le dispositif de conservation du facteur de couplage CFC est décrit en relation avec le mode de réalisation de la cellule mémoire CEL décrit précédemment en relation avec les figures 3 et 4.

Les éléments communs supportent les mêmes références que données en relation avec la figure 3, et ne seront pas détaillés à nouveau.

Bien qu'il a été décrit que la valeur capacitive des structures capacitives SC peut être configurée de façon à produire un effet négligeable vis-à-vis du facteur de couplage de la cellule CEL, il est envisagé de compenser une éventuelle réduction du facteur de couplage, avec ledit dispositif de conservation CFC.

En effet, les structures capacitives SC et les tranchées TR augmentent intrinsèquement la capacité parasite entre la grille flottante FG et la masse GND, et ainsi réduisent le facteur de couplage de la cellule CEL.

Compenser cette réduction est une solution pour configurer les structures capacitives SC de façon à produire un effet négligeable vis-à-vis du facteur de couplage de la cellule CEL, et ainsi préserver le facteur de couplage optimal de la cellule mémoire CEL.

Le dispositif de conservation du facteur de couplage CFC comprend une première structure capacitive de compensation SCFC1, comprenant un troisième corps électriquement conducteur CCFC couplé à la grille de commande CG du transistor d'état TE, et configuré pour être en couplage capacitif avec le premier corps électriquement conducteur CC1 de la structure capacitive SC1.

La première structure capacitive de compensation SCFC1 est destinée à et configurée pour introduire un effet capacitif entre la grille de commande CG et la grille flottante FG du transistor d'état TE, au moyen du couplage capacitif entre le troisième corps conducteur CCFC et le premier corps conducteur CC1.

Par exemple, dans cet exemple le premier corps électriquement conducteur CC1 comprend une première piste métallique s'étendant dans une direction du plan du niveau de métal respectif, et le troisième corps électriquement conducteur CCCFC comprend une troisième piste métallique, dans le même niveau de métal, longeant la première piste métallique.

La troisième piste métallique et la première piste métalliques peuvent être électriquement isolées par le diélectrique inter-métal IMD de ce niveau de métal, et être suffisamment proches pour introduire le couplage capacitif souhaité entre les deux corps électriquement conducteurs CCFC, CC1.

La grille de commande CG du transistor d'état TE est couplée au troisième corps électriquement conducteur CCFC par l'intermédiaire de contact CNT, de niveaux de métal et de vias V12 de la partie d'interconnexion BEOL.

Bien entendu, la présence du troisième corps conducteur CCFC de la première structure capacitive de compensation SCFC1 n'influence pas la fonctionnalité de protection des données stockées dans la mémoire de la structure capacitive SC1.

Par ailleurs, la première structure capacitive de compensation SCFC1 pourrait parfaitement s'appliquer au mode de réalisation dans lequel le dispositif de protection DIS ne comporte pas de tranchée remplie d'un corps conducteur TR, tel que décrit précédemment en relation avec les figures 1A, 1B et 2.

En outre, le dispositif de conservation du facteur de couplage CFC comprend une deuxième structure capacitive de compensation SCFC2, comprenant une deuxième tranchée remplie d'un matériau conducteur TRC, configurée pour être en couplage capacitif avec la tranchée remplie d'un matériau conducteur TR du dispositif de protection des données DIS.

Le matériau conducteur remplissant la deuxième tranchée TRC du dispositif de conservation du facteur de couplage CFC est électriquement couplé à la grille de commande CG du transistor d'état TE.

Ainsi, la deuxième structure capacitive de compensation SCFC2 est destinée à et configurée pour introduire un effet capacitif entre la grille de commande CG et la grille flottante FG du transistor d'état TE, au moyen du couplage capacitif entre les matériaux conducteurs des deux tranchées TR, TRC.

Par exemple le couplage entre le matériau conducteur remplissant la deuxième tranchée TRC et la grille de commande CG peut comprendre un chemin dans les niveaux d'interconnexion BEOL passant par des contacts CNT, des pistes métalliques et des vias V12.

Bien entendu, la présence de la deuxième tranchée remplie d'un matériau conducteur TRC de la deuxième structure capacitive de compensation SCFC2 n'influence pas la fonctionnalité de protection des données stockées dans la mémoire de la première tranchée remplie d'un matériau conducteur TR.

## Revendications

1. Procédé de fabrication d'un circuit intégré (CI) capable de protéger des données stockées dans une mémoire du circuit intégré, comprenant :
- une fabrication de la mémoire (MEM) comportant une fabrication d'au moins un transistor d'état (TE) comprenant une grille flottante (FG), et une écriture d'une donnée respective dans chaque transistor d'état (TE) comprenant un stockage d'une charge représentative de la donnée dans la grille flottante (FG) du transistor d'état (TE) ;
- une fabrication d'un dispositif de protection (DIS) comprenant une réalisation, pour au moins un transistor d'état (TE), d'au moins une structure capacitive (SC) comprenant :
-- un premier corps électriquement conducteur (CC1) couplé à la grille flottante du transistor d'état (FG),
-- un corps diélectrique (IMD), et
-- un deuxième corps électriquement conducteur (CC2) couplé à une borne de masse (GND),
dans lequel le corps diélectrique (IMD) est configuré :
--- pour coupler électriquement la grille flottante (FG) et la borne de masse (GND) de façon à modifier la charge de la grille flottante (FG) et perdre la donnée correspondante si une solution aqueuse est mise en contact avec le corps diélectrique, et
--- pour isoler électriquement la grille flottante (FG) et la borne de masse (GND) sinon.

2. Procédé selon la revendication 1, dans lequel la réalisation de chaque structure capacitive (SC) du dispositif de protection (DIS) comprend une formation du premier corps électriquement conducteur (CC1) et du deuxième corps électriquement conducteur (CC2) dans un même niveau de métal (M2) d'une partie d'interconnexion du circuit intégré (BEOL), le deuxième corps électriquement conducteur (CC2) étant configuré pour avoir une forme épousant au moins une partie du contour de la forme du premier corps électriquement conducteur (CC1).

3. Procédé selon la revendication 2, comprenant une réalisation de plusieurs transistors d'état (TE1-TE4) et de plusieurs structures capacitives (SC1-SC4) respectivement pour lesdits plusieurs transistors d'état (TE1-TE4), les structures capacitives (SC1-SC4) étant fabriquées dans des niveaux de métal différents d'une structure capacitive à une autre.

4. Procédé selon l'une des revendications 2 ou 3, dans lequel la formation du matériau diélectrique (IMD) est incluse à une formation
d'une couche de diélectrique inter-métal du niveau de métal (M2) dans lequel sont formés les corps électriquement conducteurs respectifs (CC1, CC2).

5. Procédé selon l'une des revendications 2 à 4, dans lequel, dans la réalisation de chaque structure capacitive, la réalisation du premier corps électriquement conducteur (CC1, CC2) comprend une formation d'une première piste métallique s'étendant dans une direction du plan du niveau de métal respectif (M2), et la réalisation du deuxième corps électriquement conducteur (CC2) comprend une formation d'une deuxième piste métallique longeant la première piste métallique.

6. Procédé selon l'une des revendications 1 à 5, comprenant en outre une fabrication d'au moins une première structure capacitive de compensation (SCFC1) comprenant un troisième corps électriquement conducteur (CCFC) couplé à une grille de commande (CG) du transistor d'état (TE), la grille de commande (CG) surmontant la grille flottante (FG), le troisième corps électriquement conducteur (CCFC) étant configuré pour être en couplage capacitif avec le premier corps électriquement conducteur (CC1) de ladite au moins une structure capacitive (SC1) du dispositif de protection des données (DIS).

7. Procédé selon l'une des revendications 1 à 6, dans lequel la fabrication du dispositif de protection des données (DIS) comprend en outre une réalisation d'au moins une tranchée remplie d'un matériau conducteur (TR) s'étendant verticalement en profondeur dans un substrat semiconducteur (PSUB) du circuit intégré (CI), le matériau conducteur remplissant chaque tranchée (TR) étant couplé électriquement à la grille flottante (FG) d'un transistor d'état respectif (TE).

8. Procédé selon la revendication 7, comprenant en outre une fabrication d'au moins une deuxième structure capacitive de compensation (SCFC2) comprenant une deuxième tranchée remplie d'un matériau conducteur (TRC) électriquement couplé à une grille de commande (CG) du transistor d'état (TE), la grille de commande (CG) surmontant la grille flottante (FG), le matériau conducteur remplissant ladite au moins une deuxième tranchée (TRC) étant configuré pour être en couplage capacitif avec le matériau conducteur remplissant ladite au moins une tranchée (TR) du dispositif de protection des données (DIS).

9. Procédé selon l'une des revendications 7 ou 8, dans lequel la réalisation de ladite au moins une tranchée remplie d'un matériau conducteur (TR), et/ou la réalisation de ladite au moins une deuxième tranchée remplie d'un matériau conducteur (TRC) sont exécutées simultanément avec la réalisation d'une région de grille verticale d'un transistor enterré (TA) couplé à chaque transistor d'état (TE).

10. Procédé selon l'une des revendications 1 à 9, dans lequel ladite donnée écrite dans chaque transistor d'état (TE) est destinée à être lue pour mettre en œuvre une fonction du circuit intégré (CI), telles que des données codant des instructions de démarrage du circuit intégré, ou telles que des données d'une clé de chiffrement/déchiffrement.

11. Circuit intégré comprenant :
- une mémoire (MEM) comportant au moins un transistor d'état (TE) comprenant une grille flottante (FG), chaque transistor d'état (FE) stockant une charge représentative d'une donnée respective dans sa grille flottante (FG) ;
- un dispositif de protection des données stockées dans la mémoire (DIS) comprenant, pour au moins un transistor d'état (TE), au moins une structure capacitive (SC) comprenant :
-- un premier corps électriquement conducteur (CC1) couplé à la grille flottante (FG) du transistor d'état (TE),
-- un corps diélectrique (IMD), et
-- un deuxième corps électriquement conducteur (CC2) couplé à une borne de masse (GND),
dans lequel le corps diélectrique (IMD) est configuré :
--- pour coupler électriquement la grille flottante (FG) et la borne de masse (GND) de façon à modifier la charge de la grille flottante (FG) et perdre la donnée correspondante si une solution aqueuse est mise en contact avec le corps diélectrique (IMD), et
--- pour isoler électriquement la grille flottante (FG) et la borne de masse (GND) sinon.

12. Circuit intégré selon la revendication 11, dans lequel le premier corps électriquement conducteur (CC1) et le deuxième corps électriquement conducteur (CC2) de chaque structure capacitive (SC) du dispositif de protection (DIS) sont situés dans un même niveau de métal (M2) d'une partie d'interconnexion du circuit intégré (BEOL), le deuxième corps électriquement conducteur (CC2) ayant une forme épousant au moins une partie du contour de la forme du premier corps électriquement conducteur (CC1).

13. Circuit intégré selon la revendication 12, dans lequel, dans chaque structure capacitive (SC), le premier corps électriquement conducteur (CC1) comprend une première piste métallique s'étendant dans une direction du plan du niveau de métal respectif, et le deuxième corps électriquement conducteur (CC2) comprend une deuxième piste métallique longeant la première piste métallique.

14. Circuit intégré selon l'une des revendications 12 ou 13, comprenant plusieurs transistors d'état (TE1-TE4) et plusieurs structures capacitives (SC1-SC4) respectives, les structures capacitives (SC1-SC4) étant situées dans des niveaux de métal différents d'une structure capacitive à une autre.

15. Circuit intégré selon l'une des revendications 12 à 14, dans lequel le matériau diélectrique (IMD) est inclus à une couche de diélectrique inter-métal du niveau de métal (M2) dans lequel sont situés les corps électriquement conducteurs respectifs (CC1, CC2).

16. Circuit intégré selon l'une des revendications 11 à 14, comportant en outre au moins une première structure capacitive de compensation (SCFC1), comprenant un troisième corps électriquement conducteur (CCFC) couplé à une grille de commande (CG) dudit au moins un transistor d'état (TE), la grille de commande (CG) surmontant la grille flottante (FG), dans lequel le troisième corps électriquement conducteur (CCFC) est configuré pour être en couplage capacitif avec le premier corps conducteur (CC1) de ladite au moins une structure capacitive (SC1).

17. Circuit intégré selon l'une des revendications 8 à 12, dans lequel le dispositif de protection des données (DIS) comprend en outre au moins une tranchée remplie d'un matériau conducteur (TR) s'étendant verticalement en profondeur dans un substrat semiconducteur (PSUB) du circuit intégré (CI), le matériau conducteur remplissant chaque tranchée (TR) étant couplé électriquement à la grille flottante (FG) d'un transistor d'état respectif (TE).

18. Circuit intégré selon la revendication 17, comprenant en outre au moins une deuxième structure capacitive de compensation (SCFC2), comprenant une deuxième tranchée remplie d'un matériau conducteur (TRC), dans lequel le matériau conducteur remplissant la deuxième tranchée (TRC) est configuré pour être en couplage capacitif avec le matériau conducteur remplissant ladite au moins une tranchée (TR) du dispositif de protection des données (DIS).

19. Circuit intégré selon l'une des revendications 17 ou 18, dans lequel ladite au moins une tranchée remplie d'un matériau conducteur (TR) et/ou ladite au moins une deuxième tranchée remplie d'un matériau conducteur (TRC) ont la même structure et comprennent les mêmes matériaux qu'une grille verticale d'un transistor enterré (TA) couplé à chaque transistor d'état (TE).

20. Circuit intégré selon l'une des revendications 11 à 19, dans lequel ladite donnée stockée dans chaque transistor d'état (TE) est destinée à être lue pour mettre en œuvre une fonction du circuit intégré (CI), telles que des données codant des instructions de démarrage du circuit intégré, ou telles que des données d'une clé de chiffrement/déchiffrement.

## Patentansprüche

1. Verfahren zur Herstellung einer integrierten Schaltung (IC), die in der Lage ist, Daten, die in einem Speicher der integrierten Schaltung gespeichert sind, zu schützen, umfassend:
- ein Herstellen des Speichers (MEM), das ein Herstellen mindestens eines Zustandstransistors (TE), der ein Floating Gate (FG) umfasst, und ein Schreiben einer jeweiligen Dateneinheit in jeden Zustandstransistor (TE) umfasst, das ein Speichern einer für die Dateneinheit repräsentativen Ladung in dem Floating Gate (FG) des Zustandstransistors (TE) umfasst;
- ein Herstellen einer Schutzvorrichtung (DIS), das ein Ausbilden, für mindestens einen Zustandstransistor (TE), mindestens einer kapazitiven Struktur (SC) umfasst, welche umfasst:
-- einen ersten elektrisch leitenden Körper (CC1), der mit dem Floating Gate (FG) des Zustandstransistors gekoppelt ist,
-- einen dielektrischen Körper (IMD), und
-- einen zweiten elektrisch leitenden Körper (CC2), der mit einer Masseklemme (GND) gekoppelt ist,
wobei der dielektrische Körper (IMD) so ausgelegt ist:
--- dass er das Floating Gate (FG) und die Masseklemme (GND) elektrisch koppelt, um die Ladung des Floating Gates (FG) zu verändern und die entsprechende Dateneinheit zu verlieren, wenn eine wässrige Lösung mit dem dielektrischen Körper in Kontakt gebracht wird, und
--- dass er andernfalls das Floating Gate (FG) und die Masseklemme (GND) elektrisch isoliert.

2. Verfahren nach Anspruch 1, wobei das Ausbilden jeder kapazitiven Struktur (SC) der Schutzvorrichtung (DIS) ein Bilden des ersten elektrisch leitenden Körpers (CC1) und des zweiten elektrisch leitenden Körpers (CC2) in derselben Metallebene (M2) eines Verbindungsteils der integrierten Schaltung (BEOL) umfasst, wobei der zweite elektrisch leitende Körper (CC2) so ausgelegt ist, dass er eine Form aufweist, die sich mindestens einem Teil der Kontur der Form des ersten elektrisch leitenden Körpers (CC1) anpasst.

3. Verfahren nach Anspruch 2, das ein Ausbilden mehrerer Zustandstransistoren (TE1-TE4), und mehrerer kapazitiver Strukturen (SC1-SC4) jeweils für die mehreren Zustandstransistoren (TE1-TE4) umfasst, wobei die kapazitiven Strukturen (SC1-SC4) von einer kapazitiven Struktur zur anderen in verschiedenen Metallebenen hergestellt werden.

4. Verfahren nach einem der Ansprüche 2 oder 3, wobei das Bilden des dielektrischen Materials (IMD) in einem Bilden einer dielektrischen Zwischenmetallschicht der Metallebene (M2), in der die jeweiligen elektrisch leitenden Körper (CC1, CC2) gebildet werden, beinhaltet ist.

5. Verfahren nach einem der Ansprüche 2 bis 4, wobei beim Ausbilden jeder kapazitiven Struktur das Ausbilden des ersten elektrisch leitenden Körpers (CC1, CC2) ein Bilden einer ersten Metallbahn umfasst, die sich in einer Richtung der Ebene der jeweiligen Metallebene (M2) erstreckt, und das Ausbilden des zweiten elektrisch leitenden Körpers (CC2) ein Bilden einer zweiten Metallbahn entlang der ersten Metallbahn umfasst.

6. Verfahren nach einem der Ansprüche 1 bis 5, das weiter ein Herstellen mindestens einer ersten kapazitiven Kompensationsstruktur (SCFC1) umfasst, die einen dritten elektrisch leitenden Körper (CCFC) umfasst, der mit einem Steuergate (CG) des Zustandstransistors (TE) gekoppelt ist, wobei das Steuergate (CG) über dem Floating Gate (FG) liegt, wobei der dritte elektrisch leitende Körper (CCFC) so ausgelegt ist, dass er mit dem ersten elektrisch leitenden Körper (CC1) der mindestens einen kapazitiven Struktur (SC1) der Vorrichtung zum Schutz der Daten (DIS) in kapazitiver Kopplung steht.

7. Verfahren nach einem der Ansprüche 1 bis 6, wobei das Herstellen der Vorrichtung zum Schutz der Daten (DIS) weiter ein Ausbilden mindestens eines mit einem leitenden Material gefüllten Grabens (TR) umfasst, der sich in einem Halbleitersubstrat (PSUB) der integrierten Schaltung (IC) vertikal in die Tiefe erstreckt, wobei das leitende Material, das jeden Graben (TR) ausfüllt, elektrisch mit dem Floating Gate (FG) eines jeweiligen Zustandstransistors (TE) gekoppelt ist.

8. Verfahren nach Anspruch 7, das weiter ein Herstellen mindestens einer zweiten kapazitiven Kompensationsstruktur (SCFC2) umfasst, die einen zweiten mit einem leitenden Material gefüllten Graben (TRC) umfasst, der elektrisch mit einem Steuergate (CG) des Zustandstransistors (TE) gekoppelt ist, wobei das Steuergate (CG) über dem Floating Gate (FG) liegt, wobei das leitende Material, das den mindestens einen zweiten Graben (TRC) ausfüllt, so ausgelegt ist, dass es mit dem leitenden Material, das den mindestens einen Graben (TR) der Vorrichtung zum Schutz der Daten (DIS) ausfüllt, in kapazitiver Kopplung steht.

9. Verfahren nach einem der Ansprüche 7 oder 8, wobei das Ausbilden des mindestens einen mit einem leitenden Material gefüllten Grabens (TR) und/oder das Ausbilden des mindestens einen zweiten mit einem leitenden Material gefüllten Grabens (TRC) gleichzeitig mit dem Ausbilden eines vertikalen Gate-Bereichs eines vergrabenen Transistors (TA), der mit jedem Zustandstransistor (TE) gekoppelt ist, ausgeführt werden.

10. Verfahren nach einem der Ansprüche 1 bis 9, wobei die in jeden Zustandstransistor (TE) geschriebene Dateneinheit dazu bestimmt ist, gelesen zu werden, um eine Funktion der integrierten Schaltung (IC) umzusetzen, wie etwa Daten, die Anweisungen zum Hochfahren der integrierten Schaltung codieren, oder wie etwa Daten eines Verschlüsselungs-/ Entschlüsselungsschlüssels.

11. Integrierte Schaltung, umfassend:
- einen Speicher (MEM), der mindestens einen Zustandstransistor (TE) umfasst, welcher ein Floating Gate (FG) umfasst, wobei jeder Zustandstransistor (FE) eine Ladung speichert, die für eine jeweilige Dateneinheit in seinem Floating Gate (FG) repräsentativ ist;
- eine Vorrichtung zum Schutz der in dem Speicher gespeicherten Daten (DIS), die, für mindestens einen Zustandstransistor (TE), mindestens eine kapazitive Struktur (SC) umfasst, welche umfasst:
-- einen ersten elektrisch leitenden Körper (CC1), der mit dem Floating Gate (FG) des Zustandstransistors (TE) gekoppelt ist,
-- einen dielektrischen Körper (IMD), und
-- einen zweiten elektrisch leitenden Körper (CC2), der mit einer Masseklemme (GND) gekoppelt ist,
wobei der dielektrische Körper (IMD) so ausgelegt ist:
--- dass er das Floating Gate (FG) und die Masseklemme (GND) elektrisch koppelt, um die Ladung des Floating Gates (FG) zu verändern und die entsprechende Dateneinheit zu verlieren, wenn eine wässrige Lösung mit dem dielektrischen Körper (IMD) in Kontakt gebracht wird, und
--- dass er andernfalls das Floating Gate (FG) und die Masseklemme (GND) elektrisch isoliert.

12. Integrierte Schaltung nach Anspruch 11, wobei der erste elektrisch leitende Körper (CC1) und der zweite elektrisch leitende Körper (CC2) jeder kapazitiven Struktur (SC) der Schutzvorrichtung (DIS) in derselben Metallebene (M2) eines Verbindungsteils der integrierten Schaltung (BEOL) liegen, wobei der zweite elektrisch leitende Körper (CC2) eine Form aufweist, die sich mindestens einem Teil der Kontur der Form des ersten elektrisch leitenden Körpers (CC1) anpasst.

13. Integrierte Schaltung nach Anspruch 12, wobei, bei jeder kapazitiven Struktur (SC), der erste elektrisch leitende Körper (CC1) eine erste Metallbahn umfasst, die sich in einer Richtung der Ebene der jeweiligen Metallebene erstreckt, und der zweite elektrisch leitende Körper (CC2) eine zweite Metallbahn entlang der ersten Metallbahn umfasst.

14. Integrierte Schaltung nach einem der Ansprüche 12 oder 13, die mehrere Zustandstransistoren (TE1-TE4) und mehrere jeweilige kapazitive Strukturen (SC1-SC4) umfasst, wobei die kapazitiven Strukturen (SC1-SC4) von einer kapazitiven Struktur zur anderen in verschiedenen Metallebenen liegen.

15. Integrierte Schaltung nach einem der Ansprüche 12 bis 14, wobei das dielektrische Material (IMD) in einer dielektrischen Zwischenmetallschicht der Metallebene (M2), in der die jeweiligen elektrisch leitenden Körper (CC1, CC2) liegen, beinhaltet ist.

16. Integrierte Schaltung nach einem der Ansprüche 11 bis 14, die weiter mindestens eine erste kapazitive Kompensationsstruktur (SCFC1) umfasst, welche einen dritten elektrisch leitenden Körper (CCFC) umfasst, der mit einem Steuergate (CG) des mindestens einen Zustandstransistors (TE) gekoppelt ist, wobei das Steuergate (CG) über dem Floating Gate (FG) liegt, wobei der dritte elektrisch leitende Körper (CCFC) so ausgelegt ist, dass er mit dem ersten leitenden Körper (CC1) der mindestens einen kapazitiven Struktur (SC1) in kapazitiver Kopplung steht.

17. Integrierte Schaltung nach einem der Ansprüche 8 bis 12, wobei die Vorrichtung zum Schutz der Daten (DIS) weiter mindestens einen mit einem leitenden Material gefüllten Graben (TR) umfasst, der sich in einem Halbleitersubstrat (PSUB) der integrierten Schaltung (IC) vertikal in die Tiefe erstreckt, wobei das leitende Material, das jeden Graben (TR) ausfüllt, elektrisch mit dem Floating Gate (FG) eines jeweiligen Zustandstransistors (TE) gekoppelt ist.

18. Integrierte Schaltung nach Anspruch 17, die weiter mindestens eine zweite kapazitive Kompensationsstruktur (SCFC2) umfasst, welche einen zweiten mit einem leitenden Material gefüllten Graben (TRC) umfasst, wobei das leitende Material, das den zweiten Graben (TRC) ausfüllt, so ausgelegt ist, dass es mit dem leitenden Material, das den mindestens einen Graben (TR) der Vorrichtung zum Schutz der Daten (DIS) ausfüllt, in kapazitiver Kopplung steht.

19. Integrierte Schaltung nach einem der Ansprüche 17 oder 18, wobei der mindestens eine mit einem leitenden Material gefüllte Graben (TR) und/oder der mindestens eine zweite mit einem leitenden Material gefüllte Graben (TRC) die gleiche Struktur aufweisen und die gleichen Materialien umfassen wie ein vertikales Gate eines vergrabenen Transistors (TA), der mit jedem Zustandstransistor (TE) gekoppelt ist.

20. Integrierte Schaltung nach einem der Ansprüche 11 bis 19, wobei die in jedem Zustandstransistor (TE) gespeicherte Dateneinheit dazu bestimmt ist, gelesen zu werden, um eine Funktion der integrierten Schaltung (IC) umzusetzen, wie etwa Daten, die Anweisungen zum Hochfahren der integrierten Schaltung codieren, oder wie etwa Daten eines Verschlüsselungs-/Entschlüsselungsschlüssels.

## Claims

1. Method for manufacturing an integrated circuit (CI) capable of protecting data stored in a memory of the integrated circuit, comprising:
- a manufacture of the memory (MEM) including a manufacture of at least one state transistor (TE) comprising a floating gate (FG), and a writing of a respective data in each state transistor (TE) comprising a storage of a charge representing the data in the floating gate (FG) of the state transistor (TE);
- a manufacture of a protection device (DIS) comprising a production, for at least one state transistor (TE), of at least one capacitive structure (SC) comprising:
-- a first electrically conductive body (CC1) coupled to the floating gate of the state transistor (FG),
-- a dielectric body (IMD), and
-- a second electrically conductive body (CC2) coupled to a ground terminal (GND),
wherein the dielectric body (IMD) is configured:
--- to electrically couple the floating gate (FG) and the ground terminal (GND) so as to modify the charge of the floating gate (FG) and to lose the corresponding data if an aqueous solution is put in contact with the dielectric body, and
--- to electrically isolate the floating gate (FG) and the ground terminal (GND) otherwise.

2. Method according to claim 1, wherein the production of each capacitive structure (SC) of the protection device (DIS) comprises a formation of the first electrically conductive body (CC1) and of the second electrically conductive body (CC2) in a same metal level (M2) of an interconnection part of the integrated circuit (BEOL), the second electrically conductive body (CC2) being configured to have a shape following at least a part of the contour of the shape of the first electrically conductive body (CC1) .

3. Method according to claim 2, comprising a production of a plurality of state transistors (TE1-TE4) and of a plurality of capacitive structures (SC1-SC4) respectively for said plurality of state transistors (TE1-TE4), the capacitive structures (SC1-SC4) being manufactured in different metal levels from one capacitive structure to another.

4. Method according to one of claims 2 or 3, wherein the formation of the dielectric material (IMD) is included in a formation of an inter-metal dielectric layer of the metal level (M2) wherein the respective electrically conductive bodies (CC1, CC2) are formed.

5. Method according to one of claims 2 to 4, wherein, in producing each capacitive structure, the production of the first electrically conductive body (CC1, CC2) comprises a formation of a first metal track extending in a direction of the plane of the respective metal level (M2), and the production of the second electrically conductive body (CC2) comprises a formation of a second metal track running along the first metal track.

6. Method according to one of claims 1 to 5, furthermore comprising a manufacture of at least one first compensation capacitive structure (SCFC1) comprising a third electrically conductive body (CCFC) coupled to a control gate (CG) of the state transistor (TE), the control gate (CG) surmounting the floating gate (FG), the third electrically conductive body (CCFC) being configured to be in capacitive coupling with the first electrically conductive body (CC1) of said at least one capacitive structure (SC1) of the data protection device (DIS).

7. Method according to one of claims 1 to 6, wherein the manufacture of the data protection device (DIS) further comprises a production of at least one trench filled with a conductive material (TR) extending vertically in depth in a semiconductor substrate (PSUB) of the integrated circuit (CI), the conductive material filling each trench (TR) being electrically coupled to the floating gate (FG) of a respective state transistor (TE).

8. Method according to claim 7, further comprising a manufacture of at least one second compensation capacitive structure (SCFC2) comprising a second trench filled with a conductive material (TRC) electrically coupled to a control gate (CG) of the state transistor (TE), the control gate (CG) surmounting the floating gate (FG), the conductive material filling said at least one second trench (TRC) being configured to be in capacitive coupling with the conductive material filling said at least one trench (TR) of the data protection device (DIS).

9. Method according to one of claims 7 or 8, wherein the production of said at least one trench filled with a conductive material (TR), and/or the production of said at least one second trench filled with a conductive material (TRC) are implemented simultaneously with the production of a vertical gate region of a buried transistor (TA) coupled to each state transistor (TE).

10. Method according to one of claims 1 to 9, wherein said data written in each state transistor (TE) is intended to be read to implement a function of the integrated circuit (CI), such as data encoding instructions for booting the integrated circuit, or such as data of an encryption/decryption key.

11. Integrated circuit comprising:
- a memory (MEM) including at least one state transistor (TE) comprising a floating gate (FG), each state transistor (FE) storing a charge representing a respective data in its floating gate (FG);
- a device for protecting the data stored in the memory (DIS) comprising, for at least one state transistor (TE), at least one capacitive structure (SC) comprising:
-- a first electrically conductive body (CC1) coupled to the floating gate (FG) of the state transistor (TE),
-- a dielectric body (IMD), and
-- a second electrically conductive body (CC2) coupled to a ground terminal (GND),
wherein the dielectric body (IMD) is configured:
--- to electrically couple the floating gate (FG) and the ground terminal (GND) so as to modify the charge of the floating gate (FG) and lose the corresponding data if an aqueous solution is put in contact with the dielectric body (IMD), and
--- to electrically isolate the floating gate (FG) and the ground terminal (GND) otherwise.

12. Integrated circuit according to claim 11, wherein the first electrically conductive body (CC1) and the second electrically conductive body (CC2) of each capacitive structure (SC) of the protection device (DIS) are located in a same metal level (M2) of an interconnection part of the integrated circuit (BEOL), the second electrically conductive body (CC2) having a shape following at least part of the contour of the shape of the first electrically conductive body (CC1).

13. Integrated circuit according to claim 12, wherein, in each capacitive structure (SC), the first electrically conductive body (CC1) comprises a first metal track extending in a direction of the plane of the respective metal level, and the second electrically conductive body (CC2) comprises a second metal track running along the first metal track.

14. Integrated circuit according to one of claims 12 or 13, comprising a plurality of state transistors (TE1-TE4) and a plurality of respective capacitive structures (SC1-SC4), the capacitive structures (SC1-SC4) being located in different metal levels from one capacitive structure to another.

15. Integrated circuit according to one of claims 12 to 14, wherein the dielectric material (IMD) is included in an inter-metal dielectric layer of the metal level (M2) wherein the respective electrically conductive bodies (CC1, CC2) are located.

16. Integrated circuit according to one of claims 11 to 14, further including at least one first compensation capacitive structure (SCFC1), comprising a third electrically conductive body (CCFC) coupled to a control gate (CG) of said at least one state transistor (TE), the control gate surmounting the floating gate (FG), wherein the third electrically conductive body (CCFC) is configured to be in capacitive coupling with the first conductive body (CC1) of said at least one capacitive structure (SC1).

17. Integrated circuit according to one of claims 8 to 12, wherein the data protection device (DIS) further comprises at least one trench (TR) filled with a conductive material extending vertically in depth in a semiconductor substrate (PSUB) of the integrated circuit (CI), the conductive material filling each trench (TR) being electrically coupled to the floating gate (FG) of a respective state transistor (TE).

18. Integrated circuit according to claim 17, further comprising at least one second compensation capacitive structure (SCFC2), comprising a second trench filled with a conductive material (TRC), wherein the conductive material filling the second trench (TRC) is configured to be in capacitive coupling with the conductive material filling said at least one trench (TR) of the data protection device (DIS).

19. Integrated circuit according to one of claims 17 or 18, wherein said at least one trench (TR) filled with a conductive material and/or said at least one second trench (TRC) filled with a conductive material have the same structure and comprise the same materials as a vertical gate of a buried transistor (TA) coupled to each state transistor (TE).

20. Integrated circuit according to one of claims 11 to 19, wherein said data stored in each state transistor (TE) is intended to be read to implement a function of the integrated circuit (CI), such as data encoding instructions for booting the integrated circuit, or such as data of an encryption/decryption key.
